# EUROPÄISCHE PATENTSCHRIFT

(11) **EP 0 947 817 B1**
(45) Veröffentlichungstag und Bekanntmachung des Hinweises auf die Patenterteilung: **01.08.2007**
(21) Anmeldenummer: 99100366.6
(22) Anmeldetag: 15.01.1999
(51) Int. Cl.: G01M 17/007, G01M 17/06

(54) **Messgerät zur Fahrzeugdiagnose**
Measuring apparatus for vehicle diagnostic
Appareil de mesure pour le diagnostique de véhicule

(30) Priorität: 31.03.1998 DE 19814357
(43) Veröffentlichungstag der Anmeldung: 06.10.1999
(73) Patentinhaber: MAHA Maschinenbau Haldenwang GmbH & Co. KG, 87490 Haldenwang (DE)
(72) Erfinder: Knestel, Anton, 87496 Hopferbach (DE)
(74) Vertreter: Beetz & Partner

(56) Entgegenhaltungen:
- WO-A-98/31983
- DE-C- 19 503 451
- US-A- 4 121 452
- US-A- 5 207 095
- US-A- 5 369 581
- PATENT ABSTRACTS OF JAPAN vol. 1998, no. 14, 31. Dezember 1998 (1998-12-31) & JP 10 260113 A (HONDA MOTOR CO LTD), 29. September 1998 (1998-09-29)

## Beschreibung

Die Erfindung betrifft ein universelles batteriebetriebenes Meßgerät zur Fahrzeugdiagnose, das insbesondere durch den universellen Einsatz verschiedener interner und externer Sensoren und deren Koppelung miteinander eine Vielzahl von Diagnosemöglichkeiten bietet.

Zur Feststellung der gesetzlich vorgeschriebenen Mindestbremsverzögerung werden oftmals Rollenprüfstände - wie in der EP 0 433 668 beschrieben - verwendet. Diese Vorrichtung ist jedoch nur für Standardfahrzeuge anwendbar. Sonderfahrzeuge hingegen werden hauptsächlich im Fahrversuch geprüft.

Die Verwendung von herkömmlichen Bremsverzögerungsmeßgeräten mit Feder/Masse/System hat den Nachteil, daß auch ein Teil der Erdbeschleunigung mitgemessen wurde. Dies kommt dadurch zustande, daß der Schwerpunkt der Fahrzeugkarosserie über dem Angriffspunkt der Kräfte (Kontakt: Reifen/Fahrbahn) liegt. Dadurch werden bei einer Bremsverzögerung die vorderen Fahrzeugfedern zusammengedrückt und gleichzeitig die hinteren Fahrzeugfedern gestreckt. Daraus resultiert, daß sich der Winkel des Fahrzeuges gegenüber der Fahrbahn ändert, d.h. das Fahrzeug nickt ein. Dieser Nick-winkel φ produziert eine Komponente aus der Erdbeschleunigung, die mit dem eigentlichen Verzögerungsvorgang der Karosserie selbst nichts zu tun hat. Die Erdbeschleunigungskomponente errechnet sich aus sin (ϕ).

Andererseits wird durch diesen Winkel die Empfindlichkeit gegenüber der tatsächlichen Beschleunigung verringert, so daß sich die gemessene Verzögerung aus der tatsächlichen Verzögerung · cos (ϕ) errechnet.

Um diese Problematik zu umgehen, wurde bisher für genaue Messungen eine sogenannte kreiselstabilisierte Plattform verwendet und die Meßgeräte auf dieser Plattform montiert. Diese Plattform hält die Sensoren während der Fahrzeugprüffahrt gegenüber allen Nick- und Wankbewegungen (längs und quer) der Karosserie in waagerechter Lage. Dadurch treten die oben beschriebenen Fehler nicht auf. Es liegt nahe, daß eine solche Plattform eine teure und auch nicht einfach zu handhabende Vorrichtung darstellt.

Eine andere Methode ist es, durch eine spezielle Vorrichtung Farbpunkte in zeitlichem Abstand auf den Boden zu "schießen". Hierbei wird in einer Spezialvorrichtung z. B. jede Sekunde eine Farbpatrone gezündet. Über die nach dem Bremsversuch manuell ausgemessenen Strecken lässt sich eine reale Verzögerung errechnen.

Die US-A 4 694 687 betrifft einen Fahrzeugsleistungsanalysator, der einen einzigen Sensor aufweist, wobei der Sensor aus zwei Kondensatoren besteht. Dieser Sensor gibt einen X-Kanal und einen Y-Kanal aus und stellt einen G-Kraftsensor dar.

Die JP-A-60 173 473 zeigt einen Detektor zur Erfassung einer Querbeschleunigung eines Fahrzeugs, wobei ein Rollwinkel des Fahrzeugkörpers bezüglich einer Straßenoberfläche erfasst wird. Hierzu sind Wegmeßsensoren vorgesehen, deren Meßsignale über entsprechende, nicht angeführte Funktionen in eine Vertikalbewegung des Fahrzeugkörpers umgerechnet werden.

Es ist eine Aufgabe der Erfindung, ein Meßgerät für Kraftfahrzeuge zu schaffen, das eine genaue und dabei kostengünstige Erfassung einer Fahrzeugverzögerung und -beschleunigung, eine Motorleistungserfassung und eine Stoßdämpferbewertung erlaubt.

Die Aufgabe wird durch die Merkmale des unabhängigen Patentanspruchs gelöst. Die abhängigen Patentansprüche zeigen vorteilhafte Weiterentwicklungen und weitere Ausführungsformen der Erfindung auf.

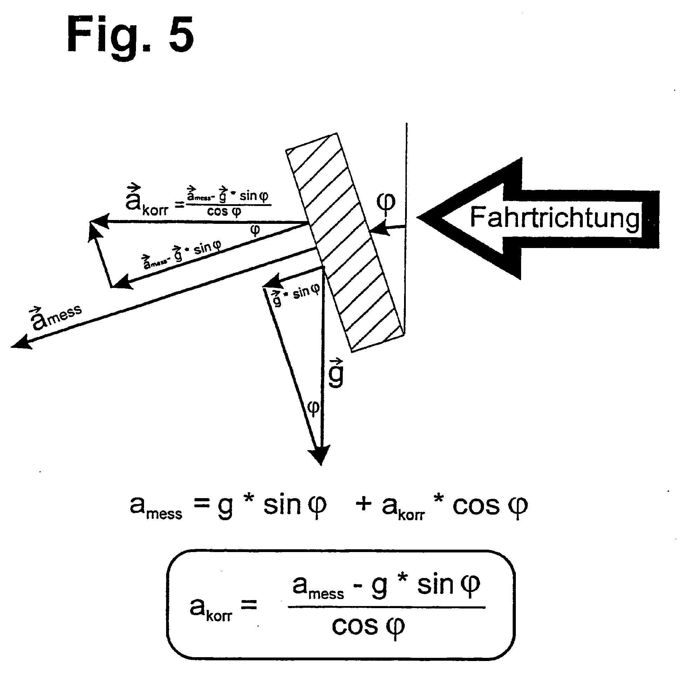

Erfindungsgemäß können über einen Sensor die fehlerbehafteten Längs- bzw. Querbeschleunigungen gemessen werden und über einen separaten Winkelsensor ebenfalls getrennt nach Längs- und Querrichtung die entsprechenden Einflüsse der Erdbeschleunigung wieder korrigiert werden. Hierzu kann ein Winkelsensor so im Gerät montiert sein, daß die empfindliche Richtung mit dem Nickwinkel (für die Längsbeschleunigung bzw. Wank- oder Rollwinkel für die Querbeschleunigung) übereinstimmt. Die jeweiligen Signale der Längs- bzw. Querbeschleunigung können wie in Fig. 5 dargestellt kompensiert werden.

Bei Verzögerungsversuchen aus höherer Geschwindigkeit mit relativ kleinen Verzögerungswerten ergeben sich zum Teil beträchtliche Bremswege bzw. Bremszeiten. Da preiswerte Winkelsensoren (nicht voll kardanische) nur eine Winkeländerung ausgeben, muß diese Winkeländerung integriert werden, um den Winkel φ zu erhalten. Geringe Offsetfehler des Sensors können sich daher zu einem beträchtlichen Winkelfehler aufintegrieren. Erfindungsgemäß kann daher der Offsetfehler kompensiert werden.

Der Bremsversuch kann online in einem Speicher des Gerätes abgelegt werden. Nach der Messung kann ein Start- bzw. Stoppunkt (Anfang/Ende) festgelegt werden. Danach kann der Nullpunkt des Winkelsensors so festgesetzt werden, daß das Winkelintegral (alle Winkel der gesamten Meßzeit) Null ist.

Weiterhin kann bei Nutzfahrzeugen, die über einen sogenannten Tachographen verfügen, das Wegsignal des Tachographen über einen Verstärkereingang gemessen 56 und aufbereitet 53 werden. Dieses Wegsignal kann mit dem Justierfaktor (k-Faktor) des Tachographen verrechnet werden. Nach dieser Berechnung liegt ein normiertes Wegsignal vor, d.h. z.B. 1 m Fahrstrecke entspricht 8 Impulsen.

Die Wegstrecke kann durch eine erste Differenzierung in eine entsprechende Fahrgeschwindigkeit umgerechnet werden. Durch nochmalige Differenzierung der Geschwindigkeit kann das Beschleunigungssignal ermittelt werden.

Es ist ferner möglich, für verschiedene Tachographentypen ein normiertes Signal (z.B. 8 Impulse pro Meter) zu entnehmen. Dadurch entfällt die oben beschriebene Korrektur im Gerät.

Durch die relativ grobe Auflösung des Wegsensors ist die zeitliche Auflösung der Beschleunigung - gerade bei kleinen Fahrgeschwindigkeiten - nicht besonders hoch. Deswegen wird erfindungsgemäß vorgeschlagen, den eingebauten Beschleunigungssensor bei höheren Fahrgeschwindigkeiten mit dem Tachographensignal abzugleichen.

Über die im Gerät vorhandene Sensorik und die oben beschriebenen Verfahren kann somit ein korrigiertes Verzögerungs- bzw. Beschleunigungssignal ermittelt werden.

Wird nun dieses so gewonnene Beschleunigungssignal integriert, erhält man eine Geschwindigkeit.

Weiterhin kann eine Motorleistung mit dem erfindungsgemäßen tragbaren Meßgerät ermittelt werden. Die Fahrzeugmasse kann hierzu in das Gerät eingegeben werden. Nunmehr kann in einem Fahrversuch die Beschleunigung und durch Integration der Beschleunigung die Geschwindigkeit ermittelt werden. Die Kalkulation der Fahrzeugvortriebskraft kann dann nach dem 2. Newton'schen Gesetz F = m · a erfolgen, wodurch durch Multiplizieren mit der Geschwindigkeit eine Beschleunigungsleistung P-Rad = F · v ermittelt werden kann.

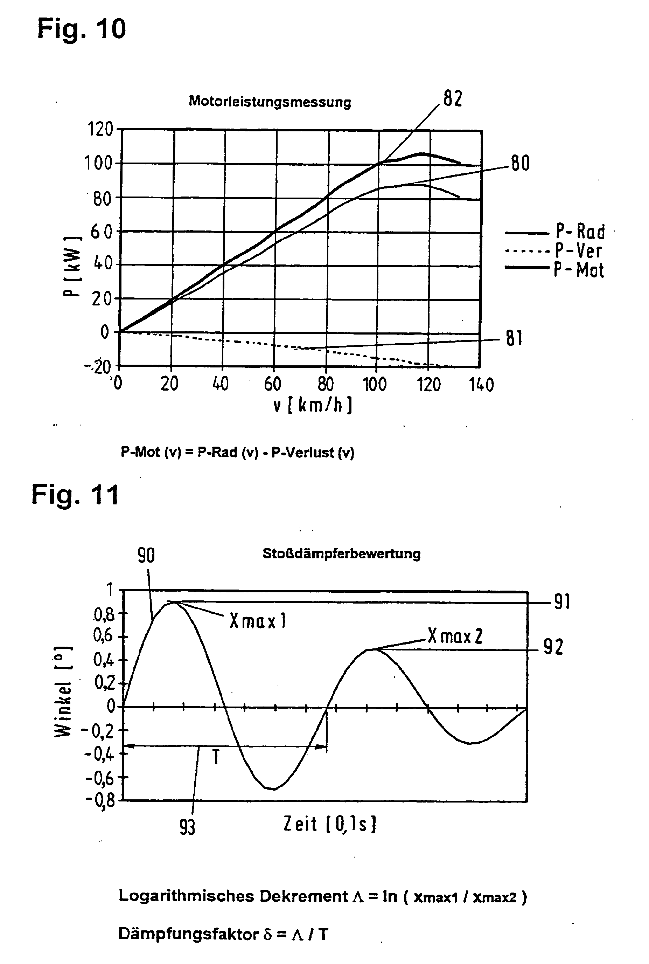

Nach Erreichen der maximalen Motordrehzahl kann der Antrieb über eine Kupplung getrennt werden. Die Fahrwiderstände bremsen nun die Fahrzeugmasse ab. Aus der hier auftretenden Verzögerung kann multipliziert mit der Fahrzeugmasse wieder eine Verzögerungskraft (F = m · a) und multipliziert mit der integrierten Verzögerung (Geschwindigkeit) eine Verzögerungsleistung 81 (P-Ver = F · v) (bzw. eine sog. Verlustleistung) errechnet werden. Nunmehr wird die Beschleunigungsleistung und die Verzögerungsleistung (bzw. die Verlustleistung) geometrisch addiert (Fig. 10), woraus eine Gesamt- bzw. Motorleistung 82 resultiert. Da während der Beschleunigung der Motor angekoppelt ist und bei der.Verzögerung ausgekoppelt ist, wird während der Beschleunigungsphase ein Massenanteil des Motors, der einer Schwungmasse entspricht, zur Fahrzeugmasse addiert, um das Nichtvorhandensein der Schwungmasse des Motors im ausgekoppelten Zustand auszugleichen. Es sei angemerkt, daß entweder der Massenanteil für die Beschleunigungsphase oder der Massenanteil für die Verzögerungsphase korrigiert werden kann. Erfindungsgemäß ist somit kein Rollensatz mit entsprechenden Schwungmassen nötig um die Motorleistung zu ermitteln.

Erfindungsgemäß kann weiterhin über die eingebaute Sensorik der sogenannte Nick- oder Wankwinkel gemessen werden. Als weitere Eingabe, z.B. über die Tastatur, kann zusätzlich der Radstand eingegeben werden. Wird nun das Fahrzeug in Schwingung versetzt, kann eine Dämpfung direkt errechnet werden, wobei das Meßgerät lediglich auf einer ebenen Fläche im Fahrgastraum liegen muß.

Des weiteren ist es möglich, eine Dämpferbeurteilung direkt während des Bremsversuches zu realisieren. Das Einnicken des Fahrzeugs wird um so größer je höher die Bremsverzögerung ist. Es wird daher eine Größe errechnet, die durch die Verzögerung relativiert wird, d.h. es wird der Nickwinkel pro m/s² Verzögerung gemessen. Erfindungsgemäß können somit die Schwingungsdämpfer des Fahrzeugs ohne großen mechanischen Aufwand überprüft und bewertet werden.

Im folgenden sind Ausführungsbeispiele der Erfindung anhand von schematischen Zeichnungen näher erläutert. Es zeigen:
Fig. 1 eine perspektivische Ansicht des Meßgeräts;
Fig. 2 eine Ansicht des Gehäuseunterteils von oben;
Fig. 3 eine Schnittansicht des Gehäuseunterteils entlang der Linie A-A;
Fig. 4 ein vereinfachtes Blockschaltbild des Meßgeräts;
Fig. 5 eine Ermittlung der korrigierten Bremsverzögerung aₖₒᵣᵣ;
Fig. 6 ein Zusammenwirken zwischen Kreisel- bzw. Winkelsensor;
Fig. 7 eine Winkelermittlung;
Fig. 8 eine Verzögerungsermittlung;
Fig. 9 eine Verwendung des Meßgeräts für einen LKW;
Fig. 10 einen Meßschrieb zur Motorleistungsmessung;
Fig. 11 einen Meßschrieb zur Stoßdämpferbewertung;
Fig. 12 einen Meßschrieb zur ABS-Prüfung und
Fig. 13 einen Meßschrieb zur Verzögerungsmessung.

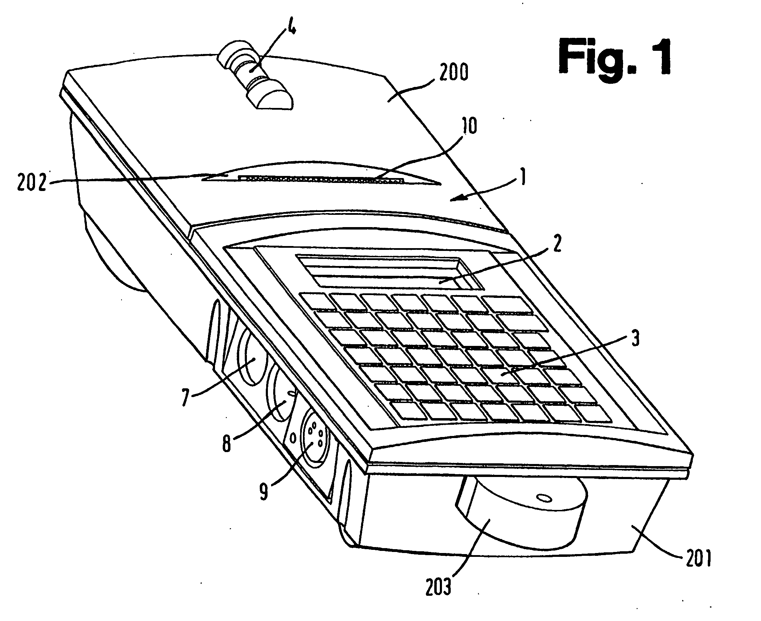

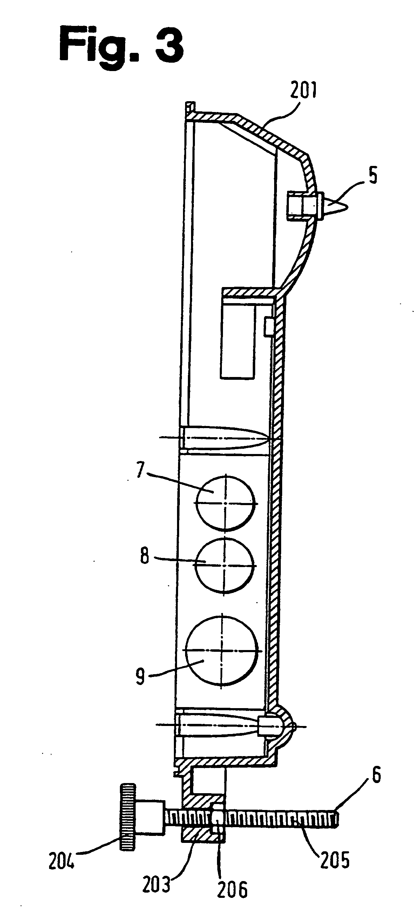

In der Fig. 1 ist ein Meßgerät mit einem Gehäuse 1 dargestellt, das ein Gehäuseoberteil 200 und ein Gehäuseunterteil 201 aufweist. An dem Gehäuseoberteil 200 ist eine Eingabetastatur 3 und ein Display 2 vorgesehen. Weiterhin weist das Gehäuseoberteil 200 einen Schlitz 202 auf, durch den ein Papierstreifen 10 austreten kann. Auf dem Papierstreifen 10 können Parameter bzw. Ergebnisse ausgegeben und dargestellt werden. An dem Gehäuseoberteil 200 ist eine Wasserwaage 4 vorgesehen, um eine Nivellierung des Meßgeräts bzw. des Gehäuses 1 zu ermöglichen. An dem Gehäuseunterteil 201 ist eine Aufnahme 203 für einen in Fig. 3 dargestellten Standfuß 5 vorgesehen. Weiterhin sind seitlich an dem Meßgerät Anschlüsse 7, 8 oder 9 dargestellt, die zum Verbinden des Meßgeräts mit externen Geräten und Sensoren dienen. Der Anschluß 7 kann beispielsweise für den Anschluß eines Drucksensors (Kesseldruck), eines Pedalkraftmessers und eines Deichselkraftsensors dienen. Der Anschluß 8 beispielsweise für den Anschluß eines Netzteils und/oder Ladegeräts 35, eines externen Tasters zum manuellen Starten von vorbestimmten Vorgängen, einer Einrichtung zum Zünden einer Farbpatrone und zum Ansteuern eines Ventils zwischen einem Hänger und einem Zugfahrzeug. Außerdem kann über diesen Anschluß 8 eine IRDA (infrared data association)- oder eine RS 232-Schnittstellenverbindung aufgebaut werden. Weiterhin kann der Anschluß 8 als Analogausgang (O-5V) genutzt werden. Der Anschluß 9 kann beispielsweise zum Anschluß von weiteren Drucksensoren (Vorder- und Hinterachse) und eines Tachographen verwendet werden.

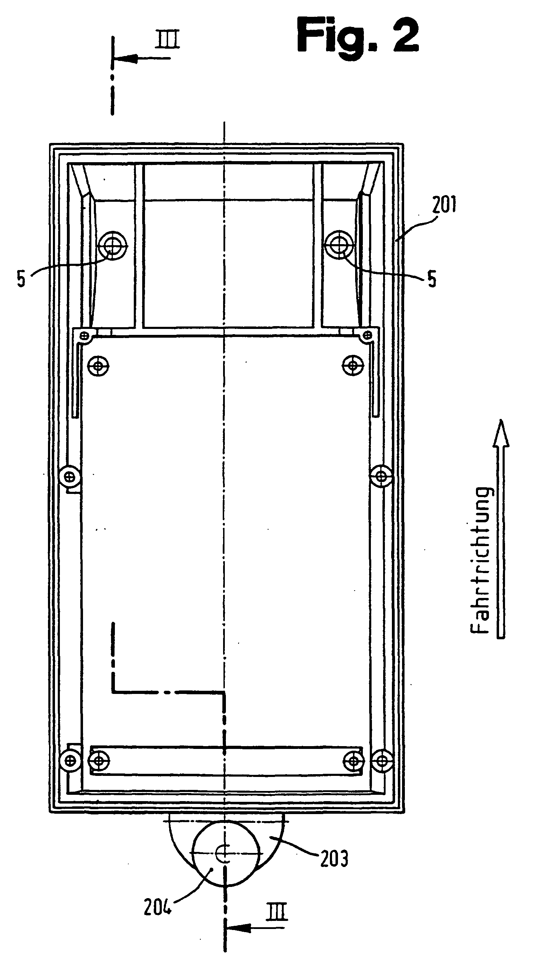

Die Fig. 2 zeigt eine Ansicht des Gehäuseunterteils 201 von oben mit abgenommenem Gehäuseoberteil 200 (nicht dargestellt). Weiterhin ist eine Einstellschraube 204 des in Fig. 3 dargestellten Standfußes 6 gezeigt.

Die Fig. 3 zeigt eine teilweise Schnittansicht des Gehäuseunterteils 201 mit dem Standfuß 6 und der Einstellschraube 6. An der Vorderseite (in Fahrtrichtung gesehen) sind zwei weitere Standfüße 5 vorgesehen. Der Standfuß 6 weist ein Außengewinde 205 auf, das mit einem Innengewinde einer Gewindemutter 206 in Kontakt steht. Die Gewindemutter 206 ist in der Aufnahme 203 fest angeordnet.

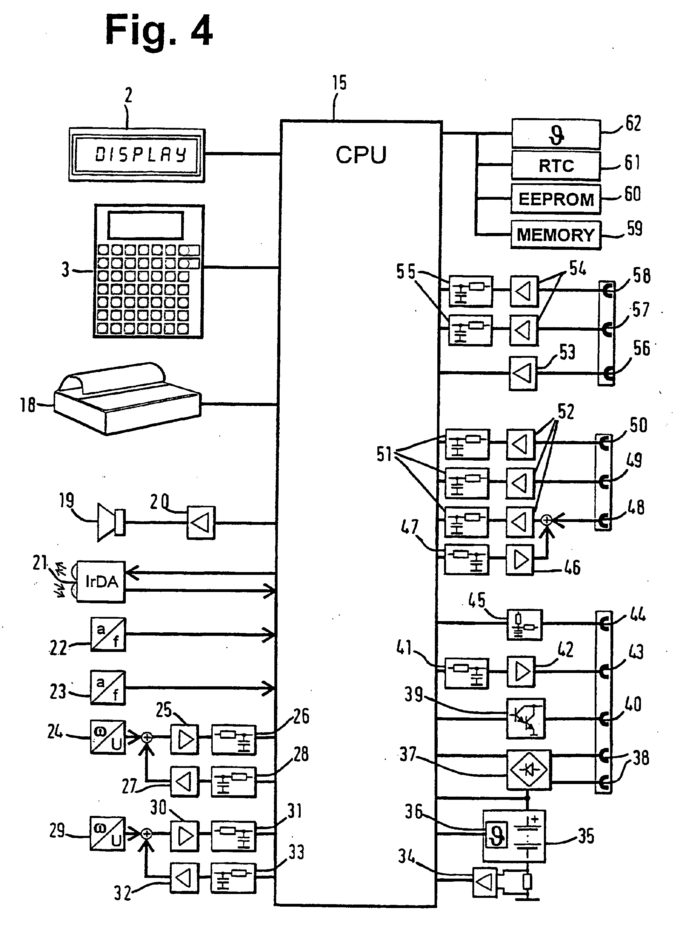

In der Fig. 4 ist eine Steuerungsplatine CPU bzw. eine Steuereinheit 15 gezeigt, an der ein Arbeitsspeicher 59, ein Variablenspeicher 60, eine Echtzeituhr 61 und ein Temperatursensor 62 angeschlossen ist. Zur Darstellung der Meßwerte bzw. Eingabe des Bedieners ist eine Anzeigeneinheit bzw. ein Display 2, eine Eingabetastatur 3, ein graphischer Drucker 18 sowie ein akustischer Signalgeber 19 angeschlossen. Zur Kommunikation bzw. zum Archivieren der Meßdaten kann eine serielle Infrarotschnittstelle 21 benutzt werden. Über den Stecker 38 wird ein Akku 35 geladen. Die Akkuladung wird hierbei durch einen Temperaturfühler 36 überwacht. Der Batterielade- bzw. entladestrom wird über einen Shunt-Widerstand gemessen und am Verstärker 34 angeschlossen. Durch das Integral des Batteriestromes ist jederzeit der Ladezustand des Akkus 35 abrufbar, selbst dann, wenn während des Betriebes gleichzeitig geladen wird.

Die Beschleunigungssensoren - Längsbeschleunigung 22, Querbeschleunigung 23 - verfügen über Frequenzausgänge und können direkt über Prozessoren ohne Analog/Digital-Wandler gemessen werden.

Die Winkelsensoren 24 und 29 (Nickwinkelsensor 24 und Wankwinkelsensor 29) geben ein winkelgeschwindigkeitsproportionales Signal ab. Da diese Signale große Driften haben, werden durch die analogen Ausgänge über die beiden Filter 28, 33 sowie die Verstärker 27, 32 die Offsetspannungen kompensiert. Das so gewonnene offsetfreie Sensorensignal wird verstärkt 25, 30 und über Filter 26, 31 dem Analog/Digital-Wandler des Controllers zugeführt.

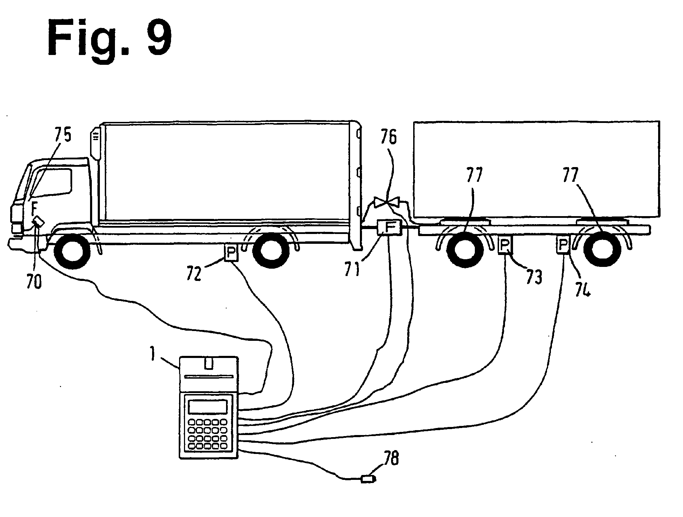

Über einen Leistungstreiber 39 kann in einem Stecker 40 ein Farbmarkengeber bzw. ein Luftventil 76 angeschlossen werden. Über den Farbmarkengeber können Farbsignale auf die Fahrbahn "geschossen" werden. Das Luftventil wird benutzt, um bei LKW-Zügen (Fig. 9) den Hänger separat zu bremsen, um dann über die Messung von Zug und Hänger die Hängerverzögerung zu bestimmen.

Über den Stecker 44 und das Filter 45 kann ein Handtaster 78 zur manuellen Auslösung der Messung angeschlossen werden.

Am Anschluß 43 steht ein Analogausgang zur Verfügung, der vom Pulsweitenmodulator des Controllers über das Filter 41 und den Verstärker 42 angesteuert wird. Er dient zur Ausgabe von Meßwerten z.B. der Pedalkraft auf analoge Anzeigen.

An den Eingängen 50, 57, 58 können pneumatische Druckluftsensoren 72, 73, 74, die über die Verstärker 52 bzw. 54 bzw. über das Filter 51 und 55 gemessen werden, angeschlossen werden.

Der Eingang 48 ist so ausgeführt, daß ein Deichselkraftsensor 71 angeschlossen werden kann. Da beim Deichselkraftsensor positive und negative Kräfte auftreten können, kann der Nullpunkt des Eingangs 48 durch das Filter 47 und den Verstärker 46 eingestellt werden.

Das Signal des Fahrzeugtachographen bzw. des Impulsgebers für den Fahrzeugtachographen 75 wird beim Stecker 56 im Gerät angeschlossen und über den Verstärker und Schmitt-Trigger 53 dem Controller zugeführt.

Der Anschluß 49 ist zum Anschluß eines Pedalkraftmessers, mit dem die Betätigungskraft des Bremspedals oder der Handbremse gemessen wird, vorgesehen.

In der Fig. 9 ist das Meßgerät mit den diversen Sensoren an einem LKW dargestellt. Über die Drucksensoren 72, 73, 74 können Einsteuerdrücke gemessen werden. Der Pedalkraftmesser 70 ist hier auf dem Bremspedal dargestellt und mißt die Kraft zwischen Fuß- und Bremspedal. Um die Bremsverzögerung für Zug und Hänger separat ermitteln zu können, wird ein Deichselkraftsensor 71 zwischen Zug und Hänger geschaltet. Dazu wird über das Ventil 76 die Druckluftbremsanlage des Anhängers 77 beaufschlagt. Über die Deichselkraft wird die Hängerabbremsung errechnet.

Dem Prüfanschluß des Tachographen 75 wird das Wegstreckensignal abgenommen, über das alternativ die Fahrzeugbremsverzögerung gemessen wird.

Wie schon einleitend erwähnt, ergeben sich bei Verzögerungsversuchen aus höherer Geschwindigkeit mit relativ kleinen Verzögerungswerten zum Teil beträchtliche Bremswege bzw. Bremszeiten. Da preiswerte Winkelsensoren (nicht voll kardanische) nur eine Winkeländerung ausgeben, muß diese Winkeländerung integriert werden, um den Winkel ϕ zu erhalten. Geringe Offsetfehler des Sensors können sich daher zu einem beträchtlichen Winkelfehler aufintegrieren. Zur Kompensation der Offsetfehler wird wie folgt vorgegangen:

Der Bremsversuch kann online in einem Speicher des Gerätes abgelegt werden. Nach der Messung wird ein Start- bzw. Stoppunkt (Anfang/Ende) festgelegt. Danach kann der Nullpunkt des Winkelsensors so festgesetzt werden, daß das Winkelintegral (alle Winkel der gesamten Meßzeit) Null ist.

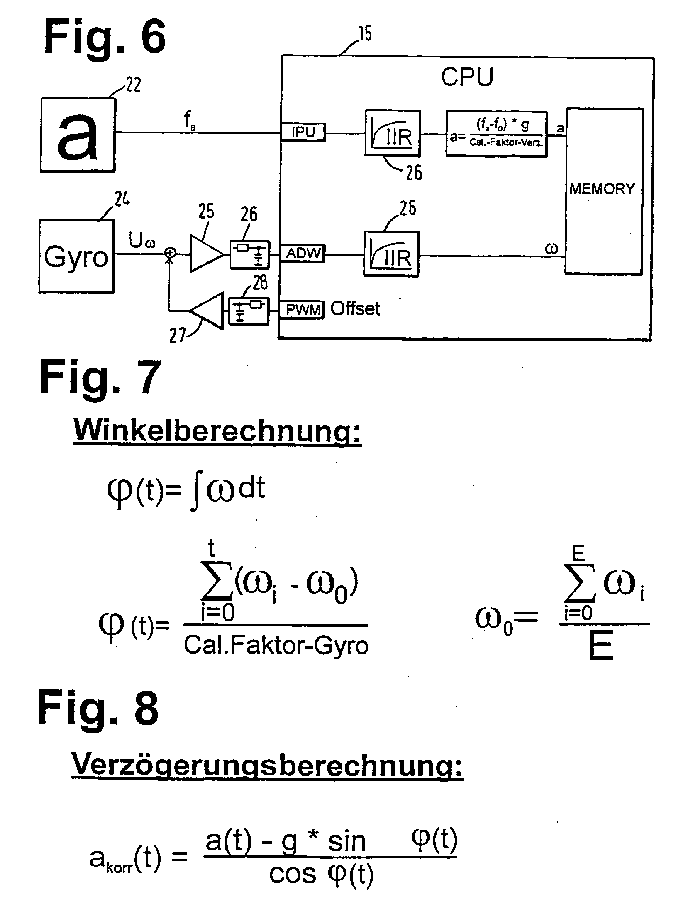

In Fig. 6 sind die dazu erforderlichen Zusammenhänge dargestellt. Die Beschleunigung a und die Winkelgeschwindigkeit U_{ω} werden parallel über Filter in einen Speicher eingelesen. Die Filter gleichen die Laufzeitunterschiede des Verzögerungssensors und des Nickwinkelsensors aus, damit beide Signale wieder phasengleich liegen. Über einen Pulsweitenmodulator PWM wird der Nullpunkt des Neigungssensors abgeglichen. Der Nick- bzw. Wankwinkel wird durch das Integral der Winkelgeschwindigkeit bestimmt, wie in der Formel nach Fig. 7 ersichtlich. Diese Prozedur wird analog für den Querbeschleunigungssensor angewandt.

In Fig. 8 wird die gemessene Bremsverzögerung über den so ermittelten Nickwinkel φ korrigiert.

In Fig. 5 wird dieser Zusammenhang in einer graphischen Darstellung erklärt. aₘₑₛₛ ist die vom Beschleunigungssensor gemessene Größe, die sich aus der realen Bremsverzögerung und der Erdbeschleunigungskomponente zusammensetzt.

Aus dem wie oben errechneten Winkels ϕ wird nunmehr mit g · sin (φ) der Anteil der Erdbeschleunigung des Meßsignals berechnet und von der gemessenen Beschleunigung abgezogen. Entsprechend wird die gemessene Beschleunigung über den cos (φ) korrigiert, um die in Fahrtrichtung wirkende Beschleunigung zu erhalten.

Die Fig. 5 zeigt die detaillierten Zusammenhänge der korrigierten Bremsverzögerung aₖₒᵣᵣ, die aus der gemessenen Verzögerung aₘₑₛₛ berechnet wird.

In der Fig. 6 wird das Zusammenwirken zwischen Beschleunigung und Kreisel- bzw. Winkelsensor dargestellt.

Bei der Fig. 7 ist das Formelwerk, das die Winkelberechnung aufzeigt, wobei der Nickwinkel φ durch die Integration der Winkelgeschwindigkeit ω errechnet wird, aufgeführt. Hierzu wird aus den aufgelaufenen Meßwerten eine Größe ω₀ errechnet, mit der die gemessene Winkelgeschwindigkeit ω₁ korrigiert wird.

In Fig. 8 ist dargestellt, wie mit dem so ermittelten Win-Winkel φ die korrigierte Beschleunigung errechnet wird.

In Fig. 10 ist das Diagramm bzw. der Meßschrieb einer Motorleistungsmessung zu sehen. Die Kurve 80 zeigt die Beschleunigungsleistung des Fahrzeugs, wobei nach Erreichen der Maximalgeschwindigkeit und dem Auskuppeln des Motors die Verlustleistung 81 aufgetragen wird. Beide Leistungen werden voneinander subtrahiert, wodurch eine um die Verlustleistung größere Leistungskurve 82 entsteht.

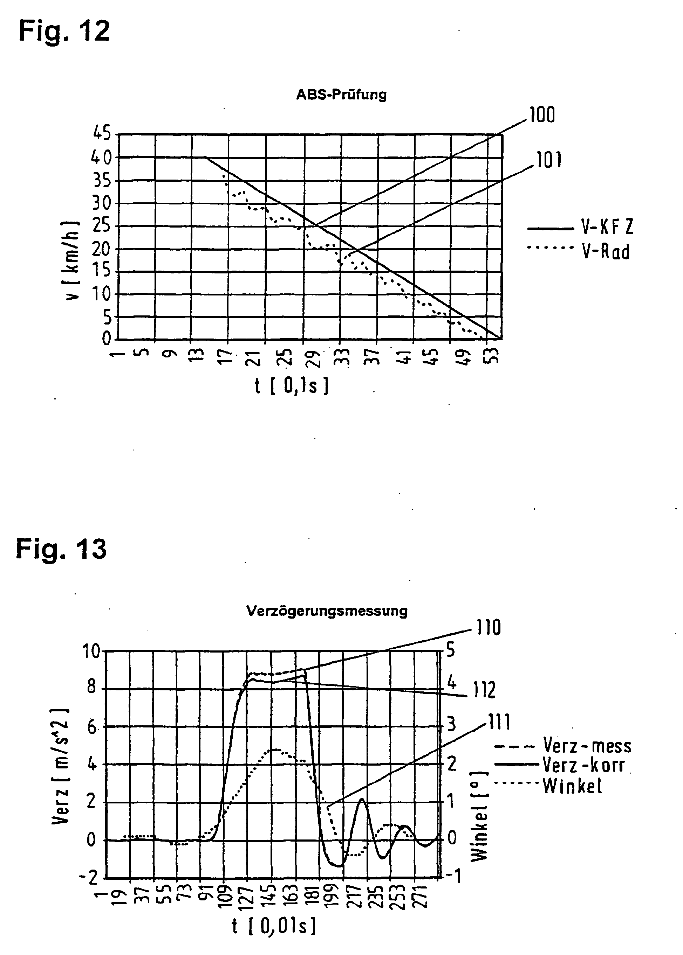

In der Fig. 11 ist ein weiterer Prüfungs-Meßschrieb dargestellt, wobei der Kurvenzug 90 den Schwingungsbereich der Karosserie darstellt und das Dämpfungsmaß des Stoßdämpfers aus dem logarithmischen Verhältnis der Amplituden 91 und 92 gebildet wird. Durch die Periodendauer 93 kann der Dämpfungsfaktor ermittelt werden.

In der Fig. 12 ist ein Meßschrieb dargestellt, bei dem die Prüfung eines mit einem Antiblockiersystem ausgestatteten Fahrzeugrades dargestellt ist. Die Verzögerungskurve 100 wird hierbei durch das kompensierte Beschleunigungssignal dargestellt. Die Kurve 101 entspricht einer Radgeschwindigkeit, die durch einen im Fahrzeugrad (nicht bildlich dargestellt) befestigten Sensor ermittelt wird. Dieser Vorgang kann gleichzeitig für ein Rad oder mehrere Räder erfolgen bzw. es können die einzelnen Fahrzeugräder in einzelnen Fahrversuchen gemessen werden.

In Fig. 13 ist eine Bremsverzögerungsmessung eines Kraftfahrzeuges dargestellt, wobei in dem Kurvenzug 110 das nicht korrigierte Beschleunigungssignal aₘₑₛₛ dargestellt ist. In dem Kurvenzug 111 ist der Nickwinkel der Karosserie (Winkel φ) dargestellt. Die eigentliche Bremsverzögerung 112 ist das erfindungsgemäß korrigierte reale Verzögerungsverhalten des Kraftfahrzeuges.

An dieser Stelle sei angemerkt, daß sämtliche vorgenannten Bauteile und Funktionen beliebig alleine verwendet werden können und/oder beliebig miteinander kombiniert werden können. Weiterhin ist die Erfindung nicht auf die dargestellte Anwendung beschränkt, sondern kann für sämtliche sich bewegenden Gegenstände eingesetzt werden.

## Patentansprüche

1. Messgerät für Fahrzeuge, insbesondere für Kraftfahrzeuge, mit einem Gehäuse (1), das eine Tastatur (3) und eine Anzeigeeinheit (2) aufweist,
zumindest einem Beschleunigungssensor (22, 23) zur Erfassung einer Längs-oder Querbeschleunigung des Fahrzeugs, und einer Steuereinheit (15) zur Aufnahme von Messsiganalen des zumindest einen Beschleunigungssensors (22, 23),
**dadurch gekennzeichnet, dass**
ein separater Winkelsensor (24, 29) vorgesehen ist, der in das Messgerät integriert ist und einen Roll- oder Nickwinkel des Fahrzeugs erfasst, und die Steuereinheit (15) ein Messsignal des Winkelsensors (24, 29) aufnimmt und die erfasste Längs- oder Querbeschleunigung des Fahrzeugs über den erfassten Roll- oder Nickwinkel von Messfehlern aufgrund von Einflüssen der Erdbeschleunigung befreit.

2. Messgerät nach Anspruch 1, **dadurch gekennzeichnet, dass** das vom Winkelsensor (24) ausgegebene Winkelsignal φ so kompensiert wird, dass am Anfang und am Ende des Bremsvorganges Marken gesetzt werden und das Integral des Winkelsignals = 0 ist.

3. Messgerät nach zumindest einem der Ansprüche 1 und 2, **dadurch gekennzeichnet, dass** die notwendigen Filter (26) für den Beschleunigungs- und Winkelsensor vorzugsweise die gleichen Verzögerungszeiten vorweisen und aber unterschiedliche Signallaufzeiten der Sensoren mit jeweils unterschiedlichen Laufzeiten der Filter ausgeglichen werden.

4. Messgerät nach zumindest einem der Ansprüche 1 bis 3, **dadurch gekennzeichnet, dass** zeitgleich zur Bremsverzögerung die Pedalkraft (70) bzw. die Deichselkraft (71) zwischen Zug- und Anhängerfahrzeug sowie mehrere Bremsbetätigungsdrücke (72, 73, 74) erfasst werden.

5. Messgerät nach zumindest einem der Ansprüche 1 bis 4, **dadurch gekennzeichnet, dass** über einen Querbeschleunigungssensor (23) die Querbeschleunigung gemessen und über einen Winkelsensor (29) - quer zur Fahrtrichtung angeordnet - die Wank- bzw. Rollbewegung der Karosserie ausgeglichen wird.

6. Messgerät nach zumindest einem der Ansprüche 1 bis 5, **dadurch gekennzeichnet, dass** das über den Längsbeschleunigungssensor (22) und dem in Längsrichtung angeordneten Winkelsensor ermittelte Signal durch den Querbeschleunigungs-(23) bzw. Querwinkelsensor (29) derart verrechnet werden, dass eine Beurteilung der Bremsverzögerung separat für die linke bzw. rechte Seite des Fahrzeugs möglich wird.

7. Messgerät nach zumindest einem der Ansprüche 1 bis 6, **dadurch gekennzeichnet, dass** bei Lkws mit Anhänger zuerst die Verzögerung des Zugfahrzeuges ermittelt wird, in einem zweiten Versuch die Verzögerung des Zugfahrzeuges mit Hänger ermittelt wird und nach getrennter Eingabe von Zug- und Hängermasse die Verzögerung des Anhängers ermittelt wird.

8. Messgerät nach zumindest einem der Ansprüche 1 bis 7, **dadurch gekennzeichnet, dass** durch die gemessene Deichselkraft (71) mit der über die Tatstatur (3) eingegebenen Anhängermasse, die Gesamtverzögerung in Zug- und Hängerverzögerung aufgesplittet wird.

9. Messgerät nach zumindest einem der Ansprüche 1 bis 8, **dadurch gekennzeichnet, dass** bei einem Bremsversuch die Druckluftversorgung des Anhängers über ein Ventil (76) abgekoppelt wird, wobei der **dadurch** eingeleitete Bremsvorgang über die Federspeicherbremse eine gewisse Verzögerung von Zug und Hänger ergibt, welche durch die über die Tastatur (3) eingegebenen getrennten Fahrzeugmassen die Hängerverzögerung ergibt.

10. Messgerät nach zumindest einem der Ansprüche 1 bis 9, **dadurch gekennzeichnet, dass** durch die Integration der ermittelten Verzögerung die Fahrgeschwindigkeit und durch nochmalige Integration der Bremsweg errechnet wird.

11. Messgerät nach zumindest einem der Ansprüche 1 bis 10, **dadurch gekennzeichnet, dass** zur Messung der Fahrgeschwindigkeit das Eingangssignal eines Tachographen (75) herangezogen wird, und dass zum Abgleich der tatsächlichen Geschwindigkeit die Tachographenkonstante über die Tastatur (3) eingegeben wird, wobei aus der so gewonnenen realen Fahrzeuggeschwindigkeit durch Differenzieren die Beschleunigung ermittelt wird.

12. Messgerät nach Anspruch 11, **dadurch gekennzeichnet, dass** das kalibrierte Tachographenausgangssignal als Geschwindigkeitssignal herangezogen wird und zur Ermittlung der Beschleunigung differenziert wird.

13. Messgerät nach zumindest einem der Ansprüche 1 bis 12, **dadurch gekennzeichnet, dass** für die Pedalkraft (70), Drücke (72, 73, 74), Deichselkraft (71) Verzögerungsschwellwertvariablen vorhanden sind, die die Dokumentierung auf dem Messgerät (1) starten und gleichzeitig einen Ausgang (40) aktivieren, über den das Ventil zur Anhängerdruckluftversorgung bzw. ein Farbmarkengeber angeschlossen ist.

14. Messgerät nach zumindest einem der Ansprüche 1 bis 13, welches die gemessenen Parameter außer in einem elektronischen Speicher (59) auch auf einem Papierstreifen (10) dokumentiert, **dadurch gekennzeichnet, dass** die Stromversorgung über einen Akku (35) und/oder über das Bordnetz (38) erfolgen kann und der eingebaute Akku während der Messung bzw. während des Druckens geladen werden kann, wobei über den eingebauten Stromsensor (34) durch Integrieren des Akkustroms der aktuelle Ladezustand ermittelt wird.

15. Messgerät nach zumindest einem der Ansprüche 1 bis 14, **dadurch gekennzeichnet, dass** zum Überprüfen der im Fahrzeug eingebauten Stoßdämpfer über den Nickwinkelsensor (24) und/oder Wankwinkelsensor (29) und/oder den Längsbeschleunigungssensor (22) und/oder den Querbeschleunigungssensor (23) das Ein- und Ausfedern des Fahrzeugs (90) registriert und eine Stoßdämpferbewertungskurve ausgegeben wird, wobei ein Maß für die Dämpferleistung die Abnahme der Amplitude von einem Schwingungsvorgang zum nächsten ist.

16. Messgerät nach Anspruch 15, **dadurch gekennzeichnet, dass** die Beurteilung der Stoßdämpfer direkt während des Bremsversuches ermittelt wird, indem der Einnickwinkel mit der auftretenden Beschleunigung relativiert wird, wobei ein Nickwinkel berechnet wird, der durch die aktuelle Verzögerung dividiert wird und **dadurch** einen relativen Nickwinkel pro Beschleunigungseinheit ergibt.

17. Messgerät nach Anspruch 16, **dadurch gekennzeichnet, dass** zusätzlich zum Nickwinkel während des Bremsens die Querbeschleunigung gemessen wird und **dadurch** eine seitenabhängige Beurteilung der Stoßdämpfer ermittelt wird.

18. Messgerät nach zumindest einem der Ansprüche 15 bis 17, **dadurch gekennzeichnet, dass** das Gerät zentral im Fahrzeug, vorzugsweise im Fußraum, stationiert ist und sequentiell die Karosserie an jeder Ecke nach unten gedrückt und wieder entlastet wird, wobei die so erzeugten Winkel durch die im Gerät eingebauten Längs- und Querwinkelsensoren erfasst werden und in eine prozentuale Beurteilung der Dämpferwirkung pro Rad umgewandelt werden.

19. Messgerät nach zumindest einem der Ansprüche 15 bis 18, **dadurch gekennzeichnet, dass** zur Leistungsmessung mit den Beschleunigungswerten und der eingegebenen Fahrzeugmasse eine Fahrzeugzugkraft errechnet wird, und dass dieser Zugkraftwert mit dem integrierten Beschleunigungswert eine Antriebsleistung ergibt.

20. Messgerät nach Anspruch 19, **dadurch gekennzeichnet, dass** nach dem Messen der Antriebsleistung (80) die Fahrzeugverlustleistung (81) bei eingelegtem Gang mit gedrückter Kupplung während des Verzögerns gemessen wird und danach zu einer Gesamtmotorleistungskurve (82) aufaddiert wird.

21. Messgerät nach zumindest einem der Ansprüche 1 bis 20, **dadurch gekennzeichnet, dass** zum manuellen Starten der Messung ein Handauslöser (78) verwendet wird.

22. Messgerät nach zumindest einem der Ansprüche 1 bis 21, **dadurch gekennzeichnet, dass** die Messwerte analog über den Analogausgang (43) auf Messanzeigen ausgegeben werden.

23. Messgerät nach zumindest einem der Ansprüche 1 bis 22, **dadurch gekennzeichnet, dass** außer der Karosseriegeschwindigkeit, die über den Beschleunigungssensor (22) durch Integration der Beschleunigung ermittelt wird, mindestens eine Radgeschwindigkeit gemessen wird und **dadurch** Rückschlüsse auf die Wirkungsweise des ABS-Systems zulassen.

24. Messgerät nach zumindest einem der Ansprüche 1 bis 23, **dadurch gekennzeichnet, dass** zwei Standfüße (5) des Gehäuses (1) durch die Form eines Papiervorrates (5) gegeben sind und ein dritter, in der Höhe verstellbarer Standfuß (6), am anderen Ende des Gehäuses (1) angeordnet ist und zum Nivellieren des Gerätes (1) über die eingebaute Wasserwaage (4) dient.

25. Messgerät nach Anspruch 24, **dadurch gekennzeichnet, dass** das 3-Fußstandgehäuse so angeordnet ist, dass die zwei benachbarten Standfüße (5) in Fahrtrichtung vorne sind, so dass während der Bremsung bzw. einer Verzögerung in einer Kurve die höchstmögliche Standsicherheit erreicht wird.

26. Messgerät nach zumindest einem der Ansprüche 1 bis 25, **dadurch gekennzeichnet, dass** in einem Gehäuseoberteil (201) eine Wasserwaage (4) eingebaut ist, so dass über eine in Fahrtrichtung hinten liegende Einstellscheibe (204) das Gerät ausnivelliert werden kann.

27. Verfahren zur Aufnahme und Auswertung von Messwerten für Fahrzeuge, insbesondere für Kraftfahrzeuge, bei dem über zumindest einen Beschleunigungssensor (22, 23) eines Messgeräts eine Längs- oder Querbeschleunigung des Fahrzeugs erfasst wird, und eine Steuereinheit (15)des Messgeräts Messsignale des zumindest einen Beschleunigungssensors (22, 23) aufnimmt,
**dadurch gekennzeichnet, dass**
ein separater Winkelsensor (24, 29), der in das Messgerät integriert ist, einen Roll- oder Nickwinkel des Fahrzeugs erfasst, und die Steuereinheit (15) ein Messsignal des Winkelsensors (24, 29) aufnimmt und die erfasste Längs- oder Querbeschleunigung des Fahrzeugs über den erfassten Roll- oder Nickwinkel von Messfehlern aufgrund von Einflüssen der Erdbeschleunigung befreit.

## Claims

1. A measuring device for vehicles, in particular for motor vehicles, comprising a housing (1) having a keyboard (3) and a display unit (2), at least one acceleration sensor (22, 23) for detecting a longitudinal or transverse acceleration of the vehicle, and a control unit (15) to receive measurement signals of the at least one acceleration sensor (22, 23),
**characterized in that**
a separate angle sensor (24, 29) is provided which is integrated into the measuring device and detects a rolling or pitch angle of the vehicle and the control unit (15) receives a measurement signal of the angle sensor (24, 29) and frees the detected longitudinal or transverse acceleration of the vehicle via the detected rolling or pitch angle from measurement errors resulting from influences of acceleration due to gravity.

2. The measuring device according to claim 1, **characterized in that** the angle signal ϕ output by the angle sensor (24) is compensated such that marks are placed at the beginning and end of the braking operation and the integral of the angle signal = 0.

3. The measuring device according to at least one of claims 1 and 2, **characterized in that** the required filters (26) for the acceleration and angle sensors preferably have the same time lags, however, that different signal transit times of the sensors are compensated with respectively different transit times of the filters.

4. The measuring device according to at least one of claims 1 to 3, **characterized in that** the pedal force (70) or the trailer hitch force (71) between the tractor rig and the towed trailer as well as several brake operating pressures (72, 73, 74) are detected at the same time as the braking deceleration.

5. The measuring device according to at least one of claims 1 to 4, **characterized in that** the transverse acceleration is measured by a transverse acceleration sensor (23) and the rolling motions of the vehicle body are compensated by an angle sensor (29) - arranged transversely to the direction of travel.

6. The measuring device according to at least one of claims 1 to 5, **characterized in that** the signal determined by the longitudinal acceleration sensor (22) and the angle sensor arranged in the longitudinal direction are offset by the transverse acceleration sensor (23) and/or the transverse angle sensor (29) so that the braking deceleration can be evaluated separately for the left and right sides of the vehicle.

7. The measuring device according to at least one of claims 1 to 6, **characterized in that** for trucks with a towed trailer first the deceleration of the tractor rig is determined, in a second test the deceleration of the tractor rig with the trailer is determined, and after separate input of the tractor rig mass and the trailer mass, the deceleration of the towed trailer is determined.

8. The measuring device according to at least one of claims 1 to 7, **characterized in that** the total deceleration is split into the deceleration of the tractor rig and the deceleration of the trailer on the basis of the measured trailer hitch force (71) with the trailer mass which is entered via a keyboard (3).

9. The measuring device according to at least one of claims 1 to 8, **characterized in that** in a braking test the compressed air supply of the towed trailer is decoupled by a valve (76), the braking operation thereby initiated through the spring loaded brake yields a certain deceleration of the tractor rig and trailer which yields the trailer deceleration on the basis of the separate vehicle masses which are entered via the keyboard (3).

10. The measuring device according to at least one of claims 1 to 9, **characterized in that** the vehicle speed is calculated by integration of the deceleration thus determined and the braking distance is calculated by performing integration again.

11. The measuring device according to at least one of claims 1 to 10, **characterized in that** to measure the vehicle speed, the input signal of a tachograph (75) is used, and to adjust the actual speed, the tachograph constant is entered via the keyboard (3), with the acceleration being determined by differentiation from the real vehicle speed thus obtained.

12. The measuring device according to claim 11, **characterized in that** the calibrated tachograph output signal is used as a speed signal and is differentiated to determine the acceleration.

13. The measuring device according to at least one of claims 1 to 12, **characterized in that** for the pedal force (70), pressures (72, 73, 74), trailer hitch force (71) deceleration threshold variables are available which start the documentation on the measuring device (1) and simultaneously activate an output (40) by means of which the valve is connected to the trailer compressed air supply or to an ink mark generator.

14. The measuring device according to at least one of claims 1 to 13, which documents the measured parameters in addition to an electronic memory (59) also on a paper strip (10), **characterized in that** the power can be supplied by an accumulator (35) and/or by an on-board power supply system (38), and the built-in accumulator can be charged during the measurement or during printing, with the instantaneous charge status being determined by the built-in current sensor (34) by integration of the accumulator current.

15. The measuring device according to at least one of claims 1 to 14, **characterized in that** the deflection and rebound of the vehicle (90) are recorded by the pitch angle sensor (24) and/or rolling angle sensor (29) and/or longitudinal acceleration sensor (22) and/or transverse acceleration sensor to check the shock absorbers installed in the vehicle, and a shock absorber evaluation curve is output, with a measure of shock absorber performance being a reduction in amplitude from one vibration process to the next.

16. The measuring device according to claim 15, **characterized in that** the evaluation of the shock absorbers is determined directly during the braking test by considering the pitch angle relative to the resulting acceleration, with a pitch angle being calculated which is divided by the prevailing deceleration, thus yielding a relative pitch angle per unit of acceleration.

17. The measuring device according to claim 16, **characterized in that** in addition to the pitch angle the transverse acceleration is measured during braking so as to determine an evaluation of the shock absorbers depending on the sides.

18. The measuring device according to at least one of claims 15 to 17, **characterized in that** the device is positioned centrally in the vehicle, preferably in the foot space, and sequentially the vehicle body is forced downwards and released at each corner, with the angles thus produced being detected by the longitudinal and transverse angle sensors installed in the device and converted to a percentage evaluation of the shock absorber effect per wheel.

19. The measuring device according to at least one of claims 15 to 18, **characterized in that** a vehicle tractive force is calculated with the acceleration values and the input vehicle mass to determine the power, and this tractive force value together with the integrated acceleration value yields a drive power.

20. The measuring device according to claim 19, **characterized in that** after measuring the drive power (80), the vehicle power loss (81) is measured during deceleration with the vehicle in gear but with the clutch depressed, and then they are added to yield a total engine power curve (82).

21. The measuring device according to at least one of claims 1 to 20, **characterized in that** a manual release (78) is used for starting the measurement manually.

22. The measuring device according to at least one of claims 1 to 21, **characterized in that** the measured values are output as analog values to measurement displays through the analog output (43).

23. The measuring device according to at least one of claims 1 to 22, **characterized in that** at least one wheel speed is measured in addition to the vehicle body speed, which is determined by integration of the acceleration over the acceleration sensor (22), thereby permitting inferences as to the efficacy of the anti-lock brake system.

24. The measuring device according to at least one of claims 1 to 23, **characterized in that** at least two stand bases (5) of the housing (1) are provided due to the shape of a paper supply (5) and a third stand base (6) with an adjustable height is provided on the other end of the housing (1) and serves to level the device (1) using the built-in bubble level (4).

25. The measuring device according to claim 24, **characterized in that** the 3-base stand housing is arranged so that the two neighboring stand bases (5) are located at the front in the direction of travel so that the greatest possible stability is achieved during braking or deceleration in a curve.

26. The measuring device according to at least one of claims 1 to 25, **characterized in that** a bubble level (4) is built into a top part of the housing (201) so that the device can be levelled by means of an adjusting element (204) located at the rear in the direction of travel.

27. A method of recording and analyzing measured values for vehicles, in particular motor vehicles, in which a longitudinal or transverse acceleration of the vehicle is detected by the at least one acceleration sensor (22, 23) of a measuring device and a control unit (15) of the measuring device receives measurement signals from the at least one acceleration sensor (22, 23),
**characterized in that**
a separate angle sensor (24, 29) which is integrated into the measuring device detects a rolling or pitch angle of the vehicle and the control unit (15) receives a measurement signal of the angle sensor (24, 29) and frees the detected longitudinal or transverse acceleration of the vehicle via the detected rolling or pitch angle from measurement errors resulting from influences of acceleration due to gravity.

## Revendications

1. Appareil de mesure pour des véhicules, en particulier pour des véhicules automobiles, avec un boîtier (1) comprenant
un clavier (3) et une unité d'affichage (2),
au moins un capteur d'accélération (22, 23) pour la saisie d'une accélération longitudinale ou transversale du véhicule, et
une unité de commande (15) pour l'enregistrement de signaux de mesure du ou des capteurs d'accélération (22, 23),
**caractérisé en ce qu'**
un capteur angulaire (24, 29) séparé est prévu, lequel est intégré à l'appareil de mesure et saisit un angle de roulis ou de tangage du véhicule, et **en ce que** l'unité de commande (15) enregistre un signal de mesure du capteur angulaire (24, 29) et exempte d'erreurs de mesure dues aux effets de l'accélération terrestre l'accélération longitudinale ou transversale du véhicule saisie sur l'angle de roulis ou de tangage.

2. Appareil de mesure selon la revendication 1, **caractérisé en ce que** le signal angulaire ϕ émis par le capteur angulaire (24) est compensé de telle manière que des marques soient fixées au début et à la fin du freinage, et que l'intégrale du signal angulaire soit = 0.

3. Appareil de mesure selon au moins une des revendications 1 et 2, **caractérisé en ce que** les filtres exigés (26) pour le capteur d'accélération et angulaire présentent de préférence des temps de retard identiques, et **en ce que** des temps de propagation de signal différents pour les capteurs sont toutefois compensés par des temps de propagation différents pour les filtres.

4. Appareil de mesure selon au moins une des revendications 1 à 3, **caractérisé en ce que** l'effort de pédale (70) ou l'effort au timon (71) sont saisis simultanément à la décélération de freinage entre le véhicule tracteur et le véhicule remorqué, ainsi que plusieurs pressions d'actionnement de frein (72, 73, 74).

5. Appareil de mesure selon au moins une des revendications 1 à 4, **caractérisé en ce que** l'accélération transversale est mesurée au moyen d'un capteur d'accélération transversale (23), et le mouvement de roulis de la carrosserie compensé au moyen d'un capteur angulaire (29) - disposé perpendiculairement au sens de conduite.

6. Appareil de mesure selon au moins une des revendications 1 à 5, **caractérisé en ce que** le signal détecté par le capteur d'accélération longitudinale (22) et le capteur angulaire disposé dans le sens longitudinal est compensé par le capteur d'accélération transversale (23) ou le capteur angulaire transversal (29) de manière à permettre une évaluation de la décélération de freinage, séparément pour le côté gauche et pour le côté droit du véhicule.

7. Appareil de mesure selon au moins une des revendications 1 à 6, **caractérisé en ce que** pour des véhicules type poids lourds avec remorque, la décélération du véhicule tracteur est déterminée d'abord, et en second essai la décélération du véhicule tracteur avec remorque, puis la décélération de la remorque après saisies séparées des masses de tracteur et de remorque.

8. Appareil de mesure selon au moins une des revendications 1 à 7, **caractérisé en ce que**, par l'effort au timon mesuré (71) avec la masse de remorque saisie au moyen du clavier (3), la décélération globale est partagée en décélération de tracteur et en décélération de remorque.

9. Appareil de mesure selon au moins une des revendications 1 à 8, **caractérisé en ce que** lors d'un essai de freinage, l'alimentation en air comprimé de la remorque est découplée au moyen d'une soupape (76), le freinage ainsi déclenché par le frein à ressort accumulateur donnant une certaine décélération du tracteur et de la remorque, laquelle donne la décélération de remorque par les masses de véhicule séparées saisies au moyen du clavier (3).

10. Appareil de mesure selon au moins une des revendications 1 à 9, **caractérisé en ce que** la vitesse de conduite est calculée par intégration de la décélération déterminée et par nouvelle intégration de la course de freinage.

11. Appareil de mesure selon au moins une des revendications 1 à 10, **caractérisé en ce que**, pour la mesure de la vitesse de conduite, on a recours au signal d'entrée d'un tachygraphe (75), et **en ce que**, pour la compensation de la vitesse effective, la constante de tachygraphe est saisie au moyen du clavier (3), l'accélération étant déterminée par dérivation de la vitesse réelle de véhicule ainsi obtenue.

12. Appareil de mesure selon la revendication 11, **caractérisé en ce qu'**on a recours au signal de sortie de tachygraphe calibré en tant que signal de vitesse, celui-ci étant dérivé pour déterminer l'accélération.

13. Appareil de mesure selon au moins une des revendications 1 à 12, **caractérisé en ce que** des variables de valeur limite de décélération sont présentées pour l'effort de pédale (70), les pressions (72, 73, 74), l'effort au timon (71), lesquelles initialisent la documentation sur l'appareil de mesure (1) et activent simultanément une sortie (40) raccordant la soupape d'alimentation de la remorque en air comprimé ou un émetteur de marque colorée.

14. Appareil de mesure selon au moins une des revendications 1 à 13, documentant aussi sur une bande de papier (10) les paramètres mesurés extérieurement d'une mémoire électronique (59), **caractérisé en ce que** l'alimentation en courant peut être effectuée par un accumulateur (35) et/ou par le réseau de bord (38), et **en ce que** l'accumulateur intégré peut être chargé pendant la mesure ou pendant l'impression, l'état actuel de charge étant déterminé par le capteur de courant intégré (34) par intégration du courant d'accumulateur.

15. Appareil de mesure selon au moins une des revendications 1 à 14, **caractérisé en ce que**, pour le contrôle des amortisseurs intégrés au véhicule par le capteur angulaire (24) et/ou le capteur angulaire de roulis (29) et/ou le capteur d'accélération longitudinale (22) et/ou le capteur d'accélération transversale (23), le rabattement et le débattement des amortisseurs du véhicule (90) sont enregistrés et une courbe d'analyse d'amortisseurs éditée, la diminution d'amplitude d'une phase d'oscillation à une autre étant une indication d'amortissement.

16. Appareil de mesure selon la revendication 15, **caractérisé en ce que** l'évaluation des amortisseurs est directement effectuée pendant l'essai de freinage, par relativisation de l'angle de tangage par l'accélération produite, un angle de tangage étant calculé et divisé par la décélération actuelle, un angle de tangage relatif étant ainsi obtenu par unité d'accélération.

17. Appareil de mesure selon la revendication 16, **caractérisé en ce que** l'accélération transversale est mesurée en plus de l'angle de tangage pendant le freinage, une évaluation par côté des amortisseurs étant ainsi réalisée.

18. Appareil de mesure selon au moins une des revendications 15 à 17, **caractérisé en ce que** l'appareil est fixé en position centrale dans le véhicule, de préférence au niveau des pieds, et **en ce que** la carrosserie est séquentiellement comprimée vers le bas dans chaque coin, puis relâchée, les angles ainsi générés par les capteurs angulaires longitudinaux et transversaux intégrés à l'appareil étant saisis, et convertis en une évaluation en pourcentage de l'effet d'amortissement par roue.

19. Appareil de mesure selon au moins une des revendications 15 à 18, **caractérisé en ce que** pour la mesure de puissance avec les valeurs d'accélération et la masse de véhicule saisie, un effort de traction de véhicule est calculé, et **en ce que** cette valeur d'effort de traction donne une puissance d'entraînement avec la valeur d'accélération intégrée.

20. Appareil de mesure selon la revendication 19, **caractérisé en ce qu'**après mesure de la puissance d'entraînement (80), la dissipation de puissance de véhicule (81) est mesurée pendant la décélération, avec un rapport enclenché et l'embrayage comprimé, puis ajoutée à une courbé de puissance générale du moteur (82).

21. Appareil de mesure selon au moins une des revendications 1 à 20, **caractérisé en ce qu'**un déclencheur manuel (78) est utilisé pour l'initialisation manuelle de la mesure.

22. Appareil de mesure selon au moins une des revendications 1 à 21, **caractérisé en ce que** les valeurs mesurées sont analogiquement sorties sur des indicateurs de mesure par la sortie analogique (43).

23. Appareil de mesure selon au moins une des revendications 1 à 22, **caractérisé en ce qu'**en plus de la vitesse de carrosserie, déterminée au moyen du capteur d'accélération (22) par intégration de l'accélération, au moins une vitesse de roue est mesurée, permettant de conclure à l'efficacité du système ABS.

24. Appareil de mesure selon au moins une des revendications 1 à 23, **caractérisé en ce que** deux pieds (5) du boîtier (1) sont obtenus par la forme d'une réserve de papier (5), et **en ce qu'**un troisième pied (6) réglable en hauteur est disposé à l'autre extrémité du boîtier (1) et sert à une mise à niveau de l'appareil (1) au moyen du niveau à bulle (4) intégré.

25. Appareil de mesure selon la revendication 24, **caractérisé en ce que** le boîtier à 3 pieds est disposé de sorte que les deux pieds contigus (5) soient à l'avant dans le sens de la conduite, de manière à obtenir la stabilité maximale pendant le freinage ou une décélération dans un virage.

26. Appareil de mesure selon au moins une des revendications 1 à 25, **caractérisé en ce qu'**un niveau à bulle (4) est intégré dans une pièce supérieure du boîtier (201), de manière à permettre une mise à niveau de l'appareil au moyen d'un disque de réglage (204) situé à l'arrière dans le sens de la conduite.

27. Procédé pour l'enregistrement et l'analyse de valeurs de mesure pour des véhicules, en particulier pour des véhicules automobiles, où une accélération longitudinale ou transversale du véhicule est saisie par au moins un capteur d'accélération (22, 23) d'un appareil de mesure, et où une unité de commande (15) de l'appareil de mesure enregistre de signaux de mesure du ou des capteurs d'accélération (22, 23),
**caractérisé en ce qu'**
un capteur angulaire (24, 29) séparé, intégré à l'appareil de mesure, saisit un angle de roulis ou de tangage du véhicule, et **en ce que** l'unité de commande (15) enregistre un signal de mesure du capteur angulaire (24, 29) et exempte d'erreurs de mesure dues aux effets de l'accélération terrestre l'accélération longitudinale ou transversale du véhicule saisie sur l'angle de roulis ou de tangage.
